# EUROPÄISCHE PATENTSCHRIFT

(11) **EP 0 364 894 B1**
(45) Veröffentlichungstag und Bekanntmachung des Hinweises auf die Patenterteilung: **24.02.1993**
(21) Anmeldenummer: 89119044.9
(22) Anmeldetag: 13.10.1989
(51) Int. Cl.: B65G 47/68

(54) **Vorrichtung zur Zusammenführung eines Behälterstromes zu einer geschlossenen Behälterreihe**
Device for leading a container stream to a dense container row
Dispositif de jonction d'un courant de conteneurs à une rangée compacte de conteneurs

(30) Priorität: 20.10.1988 DE 3835770
(43) Veröffentlichungstag der Anmeldung: 25.04.1990
(73) Patentinhaber: Rexing, Günter, D-45307 Essen (DE)
(72) Erfinder: Rexing, Günter, D-45307 Essen (DE)
(74) Vertreter: Spalthoff, Adolf, Dipl.-Ing.

(56) Entgegenhaltungen:
- EP-A- 0 193 878
- DE-A- 3 004 259
- DE-A- 3 418 736
- GB-A- 1 110 794

## Beschreibung

Die Erfindung betrifft eine Vorrichtung zur Zusammenführung von in einem breiten Strom auf einem oder mehreren, ein- oder mehrspurigen, endlos umlaufenden Zuförderern langsam ankommenden Behältern, vorzugsweise Flaschen, Dosen od.dgl., entlang einer einseitig angebrachten Führung zu einer schnell ablaufenden, drucklosen, geschlossenen Reihe von Behältern auf einem endlos umlaufenden Abförderer, wobei sich die Führung über den bzw. die Zuförderer hinweg zu dessen bzw. deren Transportrichtung schräg oder bogenförmig verlaufend in Richtung auf den neben dem Ablaufbereich des bzw. der Förderer angeordneten Einlaufbereich des Abförderers erstrecken und wobei der Abförderer mit mindestens einer Führungsleiste versehen ist, welche sich schräg oder bogenförmig zu dessen Längsrichtung verlaufend über den Abförderer erstreckt.

Es sind Behälterzusammenführungen bekannt, speziell in Form von Flaschenzusammenführungen, beispielsweise durch die DE-B-35 00 660 sowie die DE-A-36 23 250. Die Vereinzelung der in einem breiten Strom ankommenden Behälter geschieht in der Weise, daß diese durch die auf sie einwirkenden Fliehkräfte an die Führung gedrückt und an dieser entlang gefördert werden, bis sich eine drucklose, geschlossene Reihe von Behältern ergibt. Derartige Behälterzusammenführungen haben sich an sich gut bewährt, jedoch weisen diese konstruktionsbedingt eine bestimmte Baulänge auf, die sich bei beengten Platzverhältnisen als störend erweisen kann.

Die DE-A-30 04 259 zeigt eine Vorrichtung zur Zusammenführung von in einem breiten Strom auf einem mehrspurigen, endlos umlaufenden Zuförderer langsam ankommenden Behältern entlang einer einseitig angebrachten Führung zu einer schnell ablaufenden, drucklosen, geschlossenen Reihe von Behältern auf einem endlos umlaufenden Abförderer, wobei sich die Führung über den Zuförderer hinweg zu dessen Transportrichtung schräg verlaufend in Richtung auf den neben dem Ablaufbereich des Zuförderers angeordneten Einlaufbereich des Abförderers erstreckt und wobei der Abförderer mit einer Führungsleiste versehen ist, die sich bogenförmig zu dessen Längsrichtung verlaufend über den Abförderer erstreckt.

Der Abförderer ist bei dieser Vorrichtung gerade ausgebildet und verläuft parallel zum Zuförderer, wodurch er zugleich eine seitliche Versetzung der Förderrichtung mit sich bringt. Um sicherzustellen, daß die vom Abförderer ablaufende Behälterreihe drucklos und dennoch geschlossen ist, steigt die Laufgeschwindigkeit der Spuren des Abförderers mit zunehmendem seitlichen Abstand vom Zuförderer, wodurch ein erhöhter konstruktiver Aufwand für die Antriebseinrichtung des Abförderers erforderlich ist.

Der Erfindung liegt die Aufgabe zugrunde, eine in schneller und einfacher Weise herzustellende und zu montierende Behälterzusammenführung der eingangs genannten Art zu schaffen, die über eine vergleichsweise geringe Baulänge verfügt und die auch bei vorgegebenen, sehr beengten Platzverhältnissen nachträglich in einer generell geraden Förderstraße installiert werden kann.

Erfindungsgemäß wird dies dadurch erreicht, daß der Abförderer als kurvengängiger Transporteur ausgebildet ist und einen Bogen aufweist, mittels dem der Abförderer etwa in Längsrichtung des bzw. der Zuförderer verläuft. Durch die einander überlappende Anordnung des Ablaufbereichs des Zuförderers und des Einlaufbereichs des Abförderers ergibt sich einmal eine erheblich reduzierte Baulänge der gesamten Behälterzusammenführung. Zum anderen wird durch den im Bogen angeordneten, kurvengängigen Transporteur erreicht, daß die Behälter unter der Einwirkung der von dem Transporteur, insbesondere in dessen Bogenbereich auf diese ausgeübten Fliehkräfte vereinzelt werden, so daß diese sich an der Führungsleiste entlang zu einer geschlossenen, drucklosen Reihe aufreihen. Im Bogen des Abförderers wirkt auf die Behälter eine Zentrifugalkraft, durch die die Behälter voneinander weg bewegt werden, wodurch sich eine weitere Reduzierung des Lärms sowie der mechanischen Beanspruchung der Behälter ergibt.

Vorteilhaft ist der kurvengängige Transporteur mehrspurig ausgebildet, so daß eine vergleichsweise große Anzahl von Flaschen im Einlaufbereich übernommen und dann durch erhöhte Fördergeschwindigkeit des Abförderers in gewünschter Weise vereinzelt werden können.

Gemäß einem weiteren Merkmal der Erfindung ist die Führungsleiste mit Abstand zum Förderglied bzw. den Fördergliedern des Transporteurs angebracht. Der Abstand zwischen der Unterkante der Führungsleiste und der Aufstandsfläche des Transportgliedes bzw. der Transportglieder ist hierbei so bemessen, daß die zu vereinzelnden Behälter in liegender Position durch den so gebildeten Zwischenraum hindurchtreten können. Vorteilhaft ist der Abstand je nach Art und Größe der zu vereinzelnden Behälter einstellbar. Auf diese Weise ist sichergestellt, daß etwa umfallende Behälter zwangsläufig aus dem zu vereinzelnden Flaschenstrom aussortiert werden, und zwar durch die endlos umlaufenden Förderglieder des Transporteurs.

Gemäß einem weiteren Vorschlage der Erfindung ist vor dem und/oder in dem Vereinzelungsbereich des Transporteurs mindestens eine Rolle derart federnd nachgiebig angeordnet, daß deren äußere Umfläche in ihrer Normallage bis etwa an die äußeren Umflächen der Behälter in der weitgehend geschlossenen Reihe derselben frei vorragt. Durch die federnd nachgiebig, frei vorragend angeordnete Rolle wird erreicht, daß diese bei einem etwa vor einem an der Führungsleiste anliegenden Behälter vorstehenden und von diesem mitgedrehten oder parallellaufenden Behälter in Berührungskontakt mit der äußeren Umfläche des vorstehenden Behälters gelangt und diesem dadurch einen kleinen Impuls erteilt, so daß der vorstehende Behälter in seiner Bewegung etwas abgebremst wird mit der Folge, daß dieser sich zwangsläufig in die Lücke hinter oder vor dem an der Führungsleiste anliegenden und in Drehung befindlichen oder parallellaufenden Behälter einfügt, so daß sich eine in sich geschlossene, drucklose Reihe ergibt.

Ein Ausführungsbeispiel der Erfindung ist an Hand der Zeichnung näher erläutert, und zwar zeigt:
- Figur 1: eine Draufsicht einer Behälterzusammenführung und
- Figur 2: eine geschnittene Seitenansicht gemäß der Linie I - I der Figur 1.

Mit 1 ist der mehrspurige Zuförderer bezeichnet, auf dem langsam ein breiter Strom von zu vereinzelnden Behältern 2 ankommt. Im Ablaufbereich 3 des Zuförderers 1 befindet sich eine Führung 4, mittels der die zu vereinzelnden Behälter 2 in Richtung auf den Einlaufbereich 5 des Abförderers 6 umgelenkt werden. Die Führung 4 erstreckt sich bogenförmig über den Ablaufbereich 3 des Zuförderers 1 hinweg. Mit Abstand zur Führung 4 ist eine weitere Führung 7 vorgesehen, und zwar parallel zur Führung 4, so daß der ankommende Behälterstrom zwischen diesen Führungen 4, 7 sicher auf den Abförderer 6 übergeleitet wird.

Der Abförderer 6 besteht aus einem kurvengängigen, mehrspurigen Transporteur. Der Einlaufbereich 5 des Abförderers 6 befindet sich mittelbar oder unmittelbar neben dem Ablaufbereich 3 des Zuförderers 1. Mit anderen Worten überlappen sich die beiden Enden des Zuförderers 1 sowie des Abförderers 6, was zu einer nicht unerheblichen Verringerung der Baulänge erheblich beiträgt. Der Abförderer 6 ist so angeordnet, daß dieser über einen Bogen 8 in einen gradlinigen Bereich 9 übergeht, welcher etwa in Längsrichtung des Zuförderers 1 verläuft.

Der Abförderer 6 ist mindestens mit einer Führungsleiste 10 ausgerüstet, welche sich schräg oder bogenförmig zu dessen Längsrichtung verlaufend über den Abförderer erstreckt.

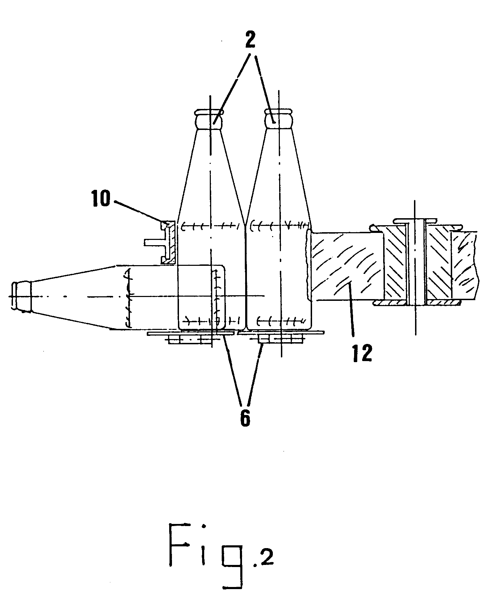

Wie insbesondere aus Figur 2 ersichtlich, ist die Führungsleiste 10 mit Abstand zu den Fördergliedern des Abförderers 6 angebracht, wobei der Abstand zwischen der Unterkante der Führungsleiste 10 und der Aufstandsfläche der Transportglieder derart bemessen ist, daß die zu vereinzelnden Behälter 2 in liegender Position durch den so gebildeten Zwischenraum hindurchtreten können, wie in Figur 2 für eine umgefallene Flasche gezeigt ist.

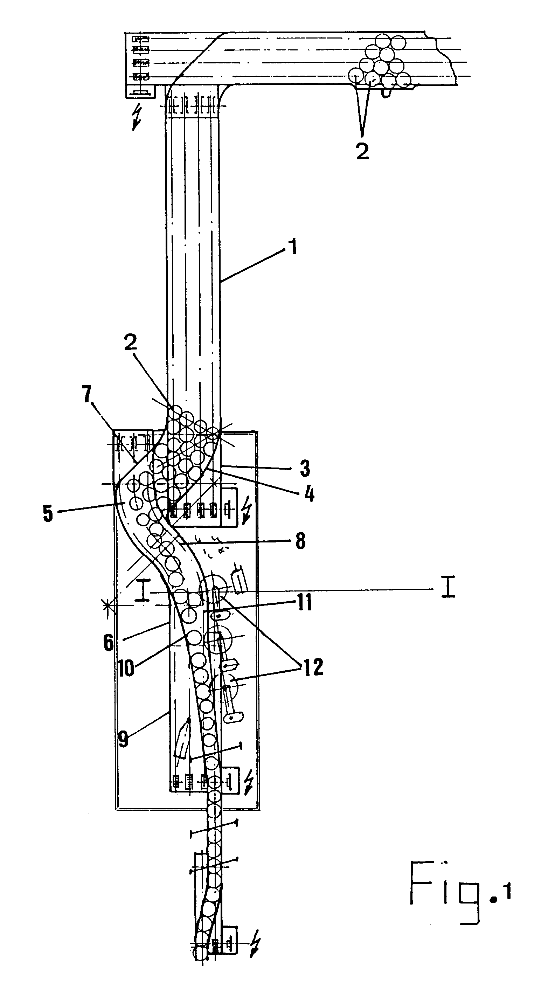

Im Vereinzelungsbereich 11 des Abförderers 6 ist dieser mit drei Rollen 12 ausgerüstet. Die Rollen 12 sind derart federnd nachgiebig angebracht, daß deren äußere Umflächen in ihrer Normallage unter Belassung eines Zwischenraumes kleiner als der Durchmesser der Behälter 2 bis vor die äußeren Umflächen der weitgehend geschlossenen Reihe von Behältern 2 frei vorragen. In Figur 1 ist in Förderrichtung gesehen die erste Rolle aus ihrer Normallage ausgelenkt, während die zweite und dritte Rolle 12 sich in ihrer Normallage befinden.

Die Rollen sind an den einen Enden von Haltearmen drehbar gelagert, deren andere Enden an der der Führungsleiste 10 gegenüberliegenden Seite der Vorrichtung schwenkbar angeordnet sind, beispielsweise in Lagerböcken od.dgl. Die Haltearme stehen unter der Einwirkung von Federn, gegen deren Federkraft die Rollen bei Vorstehen zweier Behälter 2 voreinander ausgelenkt werden. Als Rollen finden Schwamm- oder Bürstenrollen Verwendung, deren Oberflächen nachgiebig und in gewissem Maße stumpf sind, so daß diese eine Bremswirkung auf die zu vereinzelnden Behälter 2 ausüben, falls deren Umflächen mit diesen in Berührung gelangen.

## Patentansprüche

1. Vorrichtung zur Zusammenführung von in einem breiten Strom auf einem oder mehreren, ein- oder mehrspurigen, endlos umlaufenden Zuförderern langsam ankommenden Behältern, vorzugsweise Flaschen, Dosen od.dgl., entlang einer einseitig angebrachten Führung (4) zu einer schnell ablaufenden, drucklosen, geschlossenen Reihe von Behältern (2) auf einem endlos umlaufenden Abförderer (6), wobei sich die Führung (4) über den bzw. die Zuförderer (1) hinweg zu dessen bzw. deren Transportrichtung schräg oder bogenförmig verlaufend in Richtung auf den neben dem Ablaufbereich (3) des bzw. der Zuförderer (1) angeordneten Einlaufbereich (5) des Abförderers (6) erstreckt und wobei der Abförderer (6) mit mindestens einer Führungsleiste (10) versehen ist, welche sich schräg oder bogenförmig zu dessen Längsrichtung verlaufend über den Abförderer (6) erstreckt, dadurch gekennzeichnet, daß der Abförderer (6) als kurvengängiger Transporteur ausgebildet ist und einen Bogen (8) aufweist, mittels dem der Abförderer (6) etwa in Längsrichtung des bzw. der Zuförderer (1) verläuft.

2. Vorrichtung nach Anspruch 1, dadurch gekennzeichnet, daß der kurvengängige Transporteur mehrspurig ausgebildet ist.

3. Vorrichtung nach Anspruch 1 oder 2, dadurch gekennzeichnet, daß die Führungsleiste (10) mit Abstand zum Förderglied bzw. den Fördergliedern des Abförderers (6) angebracht ist.

4. Vorrichtung nach einem der vorhergehenden Ansprüche, dadurch gekennzeichnet, daß der Abstand zwischen der Unterkante der Führungsleiste (10) und der Aufstandsfläche des Transportgliedes bzw. der Transportglieder des Abförderers (6) derart bemessen ist, daß die zu vereinzelnden Behälter (2) in liegender Position durch den so gebildeten Zwischenraum hindurchtreten können.

5. Vorrichtung nach einem der vorhergehenden Ansprüche, dadurch gekennzeichnet, daß der Abstand zwischen der Unterkante der Führungsleiste (10) und der Aufstandsfläche des Transportgliedes bzw. der Transportglieder des Abförderers (6) einstellbar ist.

6. Vorrichtung nach einem der vorhergehenden Ansprüche, dadurch gekennzeichnet, daß vor dem und/oder in dem Vereinzelungsbereich (11) des Abförderers (6) mindestens eine Rolle (12) derart federnd nachgiebig angebracht ist, daß deren äußere Umfläche in ihrer Normallage bis etwa an die äußere Umfläche der Behälter (2) in der weitgehend geschlossenen Reihe derselben frei vorragt.

## Claims

1. Device for guiding together containers, preferably bottles, cans or the like, arriving slowly in a wide stream on one or a plurality of one or multi-tracked, endless delivery conveyors, along a guide (4) which is mounted on one side to form a rapidly discharging, pressureless, compact row of containers (2) on an endless discharge conveyor (6), wherein the guide (4) extends beyond the delivery conveyor(s) (1) and runs in an oblique or arcuate manner relative to the transport direction thereof in the direction of the intake area (5) of the discharge conveyor (6) disposed adjacent the discharge area (3) of the delivery conveyor(s) (1), and wherein the discharge conveyor (6) is provided with at least one guide strip (10) which extends in an oblique or arcuate manner to the longitudinal direction thereof over the discharge conveyor (6), characterised in that the discharge conveyor (6) is in the form of a curve-negotiating conveyor and comprises a bend (8) by means of which the discharge conveyor (6) extends approximately in the longitudinal direction of the delivery conveyor(s) (1).

2. Device according to Claim 1, characterised in that the curve-negotiating conveyor is multi-tracked.

3. Device according to Claim 1 or 2, characterised in that the guide strip (10) is mounted at a distance from the conveyor member or conveyor members of the discharge conveyor (6).

4. Device according to any one of the preceding claims, characterised in that the distance between the lower edge of the guide strip (10) and the contact surface of the conveyor member or members of the discharge conveyor (6) is dimensioned such that the containers (2) to be separated can pass horizontally through the space thus formed.

5. Device according to any one of the preceding claims, characterised in that the distance between the lower edge of the guide strip (10) and the contact surface of the conveyor member or members of the discharge conveyor (6) is adjustable.

6. Device according to any one of the preceding claims, characterised in that at least one roller (12) is mounted in front of and/or in the separation area (11) of the discharge conveyor (6) so as to be resiliently flexible in such a way that the outer peripheral surface thereof in its normal position freely projects approximately to the outer peripheral surface of the containers (2) in the largely compact row thereof.

## Revendications

1. Dispositif pour le regroupement le long d'un dispositif de guidage (4) disposé d'un seul côté, de récipients, de préférence de bouteilles, de boîtes ou analogues, arrivant à faible vitesse, en flux large, sur un ou plusieurs transporteurs d'entrée continus à une ou plusieurs files, pour former une file continue de récipients (2) qui avancent rapidement, sans pression, sur un transporteur de sortie (6) continu, le dispositif de guidage (4) s'étendant au-delà du (des) transporteur(s) d'entrée (1), en biais ou en arc de cercle par rapport à la direction de transport de celui-ci ou de ceux-ci, en direction de la zone d'entrée (5) du transporteur de sortie (6) voisine de la zone de sortie (3) du (des) transporteur(s) d'entrée (1) et le transporteur de sortie (6) comportant au moins une rive de guidage (10) qui s'étend au-dessus du transporteur de sortie (6), en biais ou en arc de cercle par rapport à la direction longitudinale de celui-ci, caractérisé par le fait que le transporteur de sortie (6) est agencé sous forme de transporteur courbe et comporte une courbe (8) grâce à laquelle le transporteur de sortie (6) s'étend sensiblement dans la direction longitudinale du (des) transporteur(s) d'entrée (1).

2. Dispositif selon la revendication 1, caractérisé par le fait que le transporteur courbe est à plusieurs files.

3. Dispositif selon la revendication 1 ou 2, caractérisé par le fait que la rive de guidage (10) est disposée à distance de l'organe ou des organes transporteur(s) du transporteur de sortie (6).

4. Dispositif selon l'une des revendications précédentes, caractérisé par le fait que la distance entre le bord inférieur de la rive de guidage (10) et la surface de pose de l'organe ou des organes transporteur(s) du transporteur de sortie (6) est telle, que les récipients (2) à isoler peuvent pénétrer en position couchée dans l'espace ainsi formé.

5. Dispositif selon l'une des revendications précédentes, caractérisé par le fait que la distance entre le bord inférieur de la rive de guidage (10) et la surface de pose de l'organe ou des organes transporteur(s) du transporteur de sortie (6) est réglable.

6. Dispositif selon l'une des revendications précédentes, caractérisé par le fait que, en amont de et/ou dans la zone de dégroupement (11) du transporteur de sortie (6), au moins un galet (12) est monté élastiquement de manière telle que, en position normale, sa surface périphérique fasse saillie approximativement jusqu'à la surface périphérique des récipients (2) dans la file sensiblement continue de ceux-ci.
